# EUROPEAN PATENT APPLICATION

(11) **EP 3 301 484 A1**
(43) Date of publication of application: **04.04.2018**
(21) Application number: 16191400.7
(22) Date of filing: 29.09.2016
(51) Int. Cl.: G01S 19/23, G01S 19/34

(54) **COMMUNICATION DEVICE AND METHOD FOR PERFORMING POSITIONING**

(71) Applicant: Intel IP Corporation, Santa Clara, CA 95054 (US)
(72) Inventor: ROTSTEIN, Ron, 6291076 Tel Aviv (IL); ZUKERMAN, Gil, 45300 Hod-HaSharon (IL); SCHOENAUER, Tim, 85622 Feldkirchen (DE); MEYER, Stefan, 91315 Hoechstadt (DE); TOWNSEND, Bryan, Santa Clara, CA 95054 (US)
(74) Representative: Viering, Jentschura & Partner mbB Patent- und Rechtsanwälte

(57) **Abstract**

A communication device is described comprising a positioning module, a receiver configured to receive a paging message from a mobile communication network and a determiner configured to determine a transmission time of the paging message and to transmit a time indication based on the transmission time to the positioning module. The positioning module is configured to derive a time from the time indication and to perform positioning based on the derived time.

## Description

### Technical Field

Embodiments described herein generally relate to communication devices and methods for performing positioning.

### Background

Satellite positioning by a positioning module typically requires that the positioning module has accurate knowledge of time. While the positioning module may keep an accurate time by means of an accurate clock, this has a high power consumption and may not be desirable when the positioning module is in a low power mode. On the other hand, keeping only an inaccurate time during a low power mode requires the positioning module to reacquire an accurate time after waking up which may in turn require a lot of power. Accordingly, efficient approaches for a positioning module to acquire and keep an accurate time are desirable.

### Brief Description of the Drawings

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a communication system, e.g. an LTE (Long Term Evolution) communication system.
- Figure 2: illustrates a typical tradeoff between sleep mode and coma mode.
- Figure 3: illustrates a drop of power consumption of a GNSS (Global Navigation Satellite System) core that can be achieved if the GNSS module's 32kHz clock can be made more accurate.
- Figure 4: illustrates an interface between a modem and a GNSS module composed of a Messages API and an accurate strobe line indicating a time valid event.
- Figure 5: shows a time diagram illustrating an example for a sequence of active and low power periods of a GNSS module.
- Figure 6: shows a relation of local counters, a network time and GNSS module time instants and the signaling of the network time to the GNSS module.
- Figure 7: illustrates the flow of a time synchronization between a modem and a GNSS module.
- Figure 8: illustrates a flow of a time synchronization between a modem and a GNSS module in more detail.
- Figure 9: shows a communication device.
- Figure 10: shows a method for performing positioning, for example carried out by a communication device.

### Description of Embodiments

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

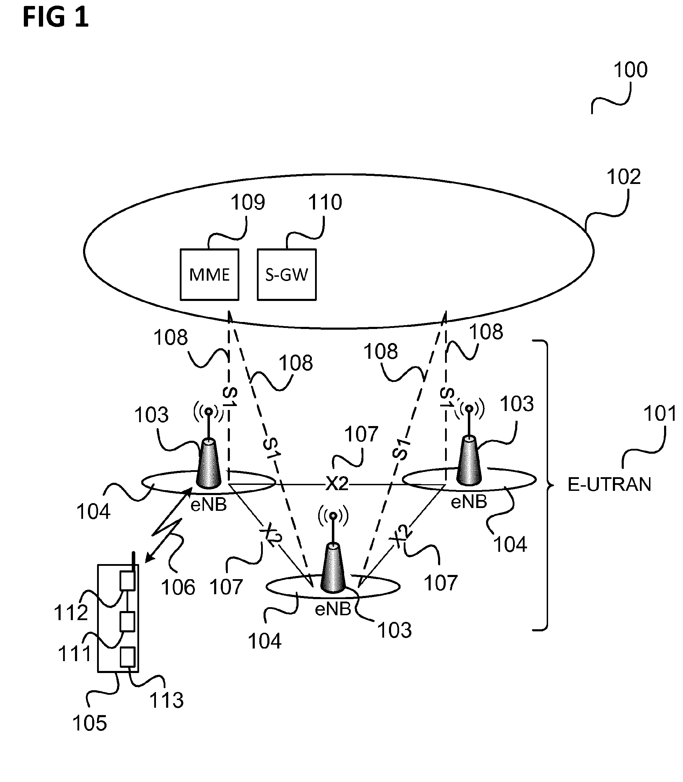

Figure 1 shows a communication system 100, e.g. an LTE (Long Term Evolution) communication system.

The communication system 100 includes a radio access network (e.g. an E-UTRAN, Evolved UMTS (Universal Mobile Communications System) Terrestrial Radio Access Network according to LTE) 101 and a core network (e.g. an EPC, Evolved Packet Core, according LTE) 102. The radio access network 101 may include base (transceiver) stations (e.g. eNodeBs, eNBs, according to LTE) 103. Each base station 103 provides radio coverage for one or more mobile radio cells 104 of the radio access network 101.

A mobile terminal (also referred to as UE, user equipment, or MS, mobile station) 105 located in one of the mobile radio cells 104 (in this example the leftmost radio cell 104) may communicate with the core network 102 and with other mobile terminals 105 via the base station providing coverage in (in other words operating) the mobile radio cell.

Control and user data are transmitted between a base station 103 and a mobile terminal 105 located in the mobile radio cell 104 operated by the base station 103 over the air interface 106 on the basis of a multiple access method.

The base stations 103 are interconnected with each other by means of a first interface 107, e.g. an X2 interface. The base stations 103 are also connected by means of a second interface 108, e.g. an S1 interface, to the core network, e.g. to an MME (Mobility Management Entity) 109, and a Serving Gateway (S-GW) 110. For example, the MME 109 is responsible for controlling the mobility of mobile terminals located in the coverage area of E-UTRAN, while the S-GW 110 is responsible for handling the transmission of user data between mobile terminals 105 and core network 102.

Data transmission between the mobile terminal 105 and the corresponding base station 103 (i.e. the base station operating the radio cell in which the mobile terminal 105 is located) is carried out in accordance with a (radio) frame structure. An LTE frame is 10ms long and consists of 20 slots of length 0.5ms. A sub-frame is defined as two consecutive slots. In each 10ms interval 10 sub-frames are available for downlink transmissions or uplink transmissions. Uplink and downlink transmissions are separated in the frequency domain (FDD) or time domain (TDD). Depending on the slot format a sub-frame may include 14 or 12 OFDMA (orthogonal frequency division multiple access) symbols in DL (downlink) and 14 or 12 SC-FDMA symbols in UL (uplink), respectively.

The radio access network 101 and the core network may support communication according to various communication technologies, e.g. mobile communication standards. For example, each base station 103 may provide a radio communication connection via the air interface between itself and the mobile terminal 105 according to LTE, UMTS, GSM (Global System for Mobile Communications), GPRS (General Packet Radio Service), EDGE (Enhanced Data Rates for GSM Evolution) radio access. Accordingly, the radio access network 102 may operate as an E-UTRAN, a UTRAN, a GSM radio access network, or a GERAN (GSM EDGE Radio Access Network). Analogously, the core network 102 may include the functionality of an EPC, a UMTS core network or a GSM core network. The approaches described herein may also be applied to future RAT technologies such as 5G.

For uplink radio communication via the air interface 106, the mobile terminal 105 includes a modem 111 which may for example make use of a receiver 112 for reception of signals from its serving base station 103.

When the mobile terminal 105 is in idle mode, it has to monitor whether the network 101 is sending any paging message to it. In case of a paging event, i.e. if the network sends a paging message, the mobile terminal 105 decode the content (Paging Cause) of the paging message and UE initiates the appropriate the procedure.

For example, according to LTE, during the idle mode, the UE 105 gets into and stays in sleeping mode defined in DRX cycle (Discontinuous Receive Cycle). This DRX cycle is defined in SIB2 (system information block 2). The UE 105 periodically wakes up and monitors the PDCCH (Physical Downlink Control Channel) in order to check for the presence of a paging message (UE looks for any information encrypted by P-RNTI (Paging Radio Network Temporary Identifier)). If the PDCCH indicates that a paging message is transmitted in the respective sub-frame, the UE 105 demodulates the PCH (paging channel) to see if the transmitted paging message is directed to it.

Further, the mobile terminal 105 in this example includes a GNSS (Global Navigation Satellite System) module 113 (which may include its own receiver or also use receiver 112) which allows the mobile terminal 105 to determine its geographical position for position-dependent services such as a navigation application.

GNSS (such as GPS: Global Positioning System) essentially measures the propagation time between satellite vehicles (SVs) and the measurement point (i.e. the mobile terminal's location). At least four measurements are required to determine the specific location, but in practice, twelve or more measurements from various SVs are used to obtain better accuracy and stability.

Key to being able to find and track a SV is an accurate clock at the receiver (i.e. the GNSS module 113). Typical clock accuracy requirements are +/- 0.5ppm, which can be achieved using expensive TCXO (temperature compensated clock oscillator) clock sources or similar methods that use a simple XTAL (crystal) frequency source calibrated at room temperature with accurate temperature measurements on the XTAL followed by analog and/or digital compensation for the expected thermally induced frequency shifts.

GNSS typically requires an accurate clock reference for two reasons:
1. Maintain accurate time during sleep cycles. If time can be kept to within 0.5ms (milliseconds), the GNSS module 113 can maintain message bit coherency and get out of sleep cycles in roughly two seconds. If the GNSS module 113 can maintain an accuracy of 0.01 ms, the GNSS module 113 can maintain chip coherency and wake up times can be shortened to less than one second.
2. During satellite acquisition, the GNSS module's receiver requires frequency stability to within +/-0.1ppm for effective acquisition and tracking.

A high accuracy time may for example be maintained by the GNSS module 113 by keeping a high frequency (typically 38.4MHz) clock on (i.e. running to keep track of time)during short and medium sleep durations (up to 1 minute) to ensure high speed wake up and maintaining a low power (so-called "coma") 32kHz XTAL (crystal) clock which is typically not correlated with the high accuracy clock, so the high accuracy clock can be used to measure the correction of the 32kHz clock (32kHz clock has an accuracy of 50-100ppm that needs to be compensated to obtain accurate sleep durations). Tight thermal measurements and factory chip and platform calibrations may be used to allow the GNSS module 113 to compensate for the frequency drifts of the XTAL clock. However, following long power saving "coma" durations which use the 32kHz clock, the GNSS module typically loses tracking synchronization with the satellite system due to frequency drift of the 32kHz clock and, typically, a full acquisition cycle needs to be run that is lengthy and power hungry.

For example, the GNSS core (included in GNSS module 113) has three basic power modes:
- ACTIVE where SV measurements are being made
- SLEEP where the core disables the GNSS module's RF (radio frequency) receiver but keeps the high accuracy 38.4MHz (thermally compensated) clock for accurate time measurements
- COMA where the core shuts down most of the power rails and shifts to a slow maintenance clock at 32kHz.

As the GNSS core typically frequently switches between active and non-active lower power modes (i.e. sleep or coma), it has to decide which low power mode to switch to during the inactive time. In sleep mode, since an accurate time and frequency measurement is possible, the GNSS core can be woken-up rapidly, but the sleep power consumption is significant. In coma mode, the power consumption is very low, but due to the inaccurate time measurement derived from the non-calibrated 32kHz clock that cannot be fully compensated, a large time drift opens up requiring a comprehensive re-acquisition cycle that consumes even more energy.

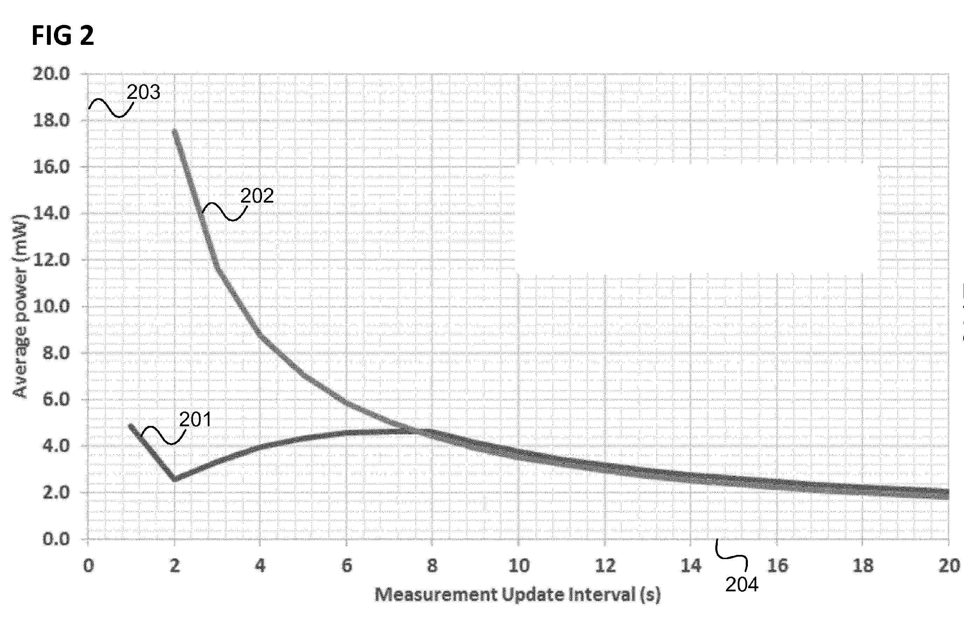

Figure 2 illustrates a typical tradeoff between sleep mode and coma mode.

A first curve 201 illustrates the average power consumption of sleep mode (plotted along the vertical axis 203) over the length of the low power period (plotted along the horizontal axis 203) and a second curve 202 illustrates the average power consumption of coma mode over the length of the low power period.

When integrating GNSS into a platform (e.g. mobile terminal) with a modem such as in the example of figure 1, both the GNSS module 113 and the modem 111 may be connected to the same XTAL derived clock source and use some thermal corrections for the XTAL frequency. However, it is easier (much less time and energy) for the modem 111 to lock into its serving base station 103 and get an accurate frequency reference during the time the modem is connected to the base station (camped).

It should be noted that when camped, the modem 111 acquires this time synchronization at well-known intervals to receive the paging information from the base station 103.

In view of this, according to one approach, when both the cellular modem 111 and GNSS module 113 use the same baseline 38.4MHz clock, knowledge of the modem 111 (that gets an accurate time and frequency measurement every paging period) is used to correct the GNSS module's clock and time duration measurements for both the GNSS module's 32kHz clock and main 38.4MHz XTAL derived clock. This alignment with the modem allows the GNSS module to use of a 32kHz clock that is derived from a free running low power mode of the 38.4MHz XTAL clock generator, thus saving the need for a separate 32kHz crystal.

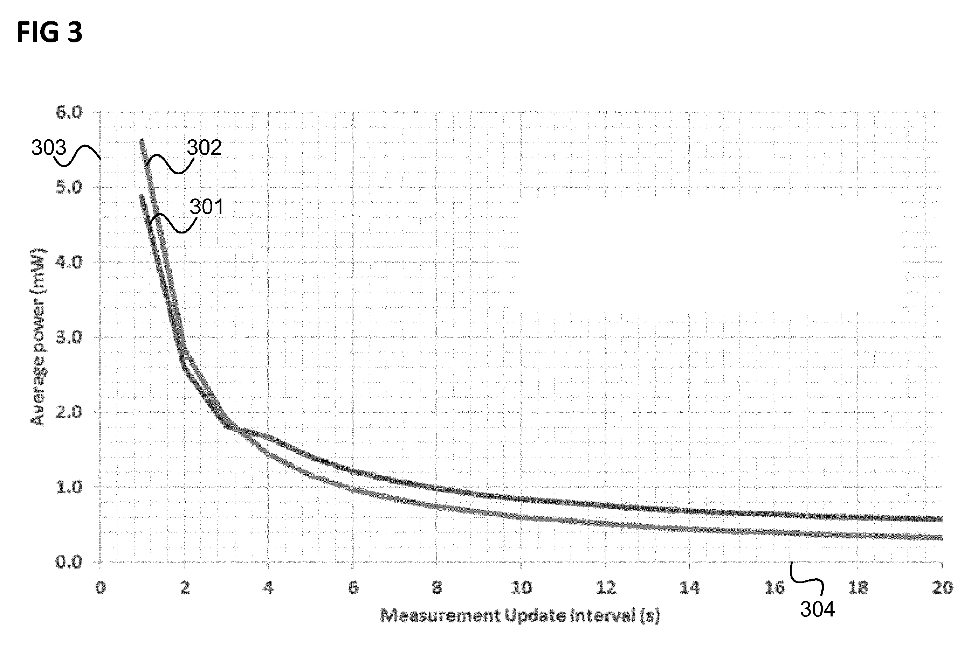

Figure 3 illustrates a drop in the power consumption of the GNSS core, which may be achieved if the GNSS module's 32kHz clock can be made more accurate.

As in figure 2, a first curve 301 illustrates the average power consumption in the sleep mode (plotted along the vertical axis 303) over the length of the low power period (plotted along the horizontal axis 303) and a second curve 302 illustrates an average power consumption of coma mode over the length of the low power period.

In the following, an approach for collaboration between the modem 111 and the GNSS module 113 is described which allows the use of the coma mode to reduce effective power for a wake up event after 4 seconds. For example, the wake-up event after 4 seconds may allow power reduction from 8mW (milliwatt) to 1.5mW and similar power reductions may be possible in most popular wakeup periods.

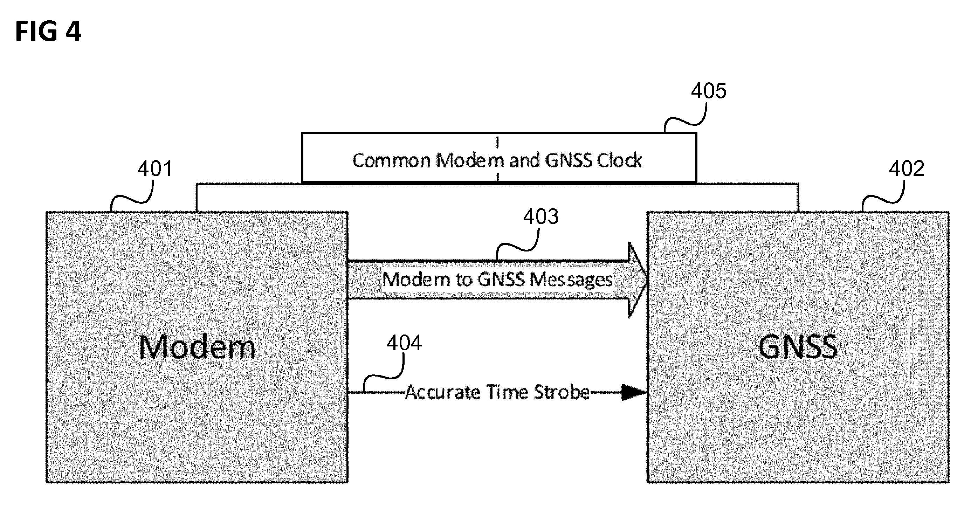

Figure 4 illustrates an interface between a modem 401 (e.g. such as modem 111) and a GNSS module 402 (e.g. such as GNSS module 113) composed of a Messages API (application programming interface) and an accurate strobe line 404 indicating a time valid event.

The modem 401 and the GNSS module 402 are connected to a common modem and GNSS clock 405, e.g. a 38.4MHz XTAL clock.

The modem 401 uses the interface to the GNSS module 402 (including API 403 and the time strobe line 404) to publish its modem time at every paging event. The format of the transmission in this example is that the modem 401 sends a time message over the API 403 with the value of a time in the near future, and activates the accurate time strobe 404 line when the time published in the message is valid. In this manner a very accurate time is transferred from the modem 401 to the GNSS MODULE 402 with the occurrence of paging events. The time information transferred from the modem 401 to the GNSS MODULE 402 for example has at least an accuracy of ±3*µs* (or even higher accuracy). The modem 401 may calculate any inaccuracies of time information as it gets it from the network by considering and compensating for example multipath propagation (typically by using the most significant signal path) and movement induced time-shift as sources of inaccuracy. The modem 401 regularly provides time information to the GNSS module 402 (e.g. at each paging event) to limit the accumulation of errors.

The GNSS module 402 may send a request to the modem 401 to enable/disable this periodic publishing of time (e.g. a subscription to a corresponding service provided by the modem 401).

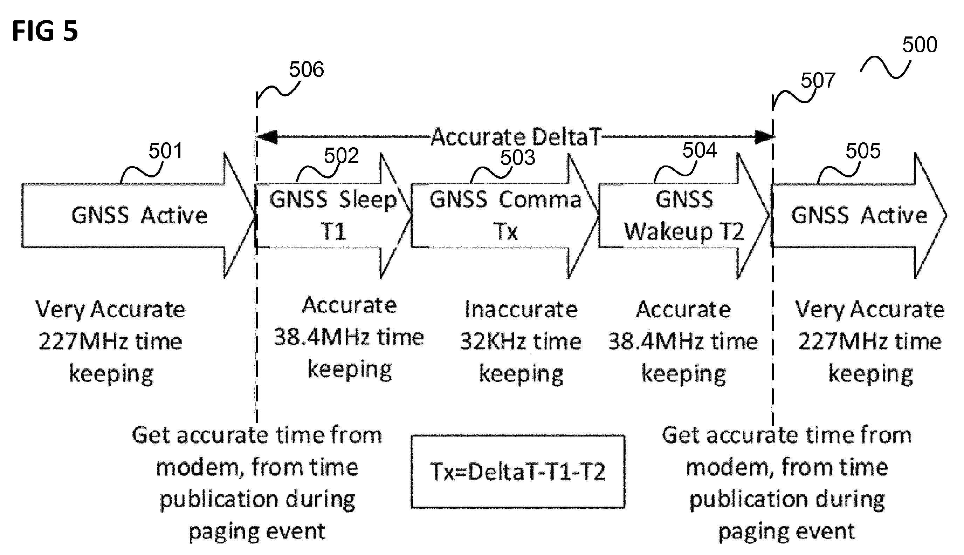

The GNSS module 402 uses the time information from the modem 401 to calculate the exact duration between two paging events as illustrated in figure 5.

Figure 5 shows a time diagram 500 illustrating a sequence of a first active period 501 of the GNSS module 402, followed by a first (short) sleep period 502 of the GNSS module 402, followed by a (long) coma period 503 of the GNSS module 402, followed by a second (short) sleep period 504 of the GNSS module 402 and followed finally by a second active period 505 of the GNSS module 402.

Before entering into the first sleep period 502, the GNSS module 402 gets an accurate time from the modem 401 from a time publication at (or shortly after) a first paging event from the modem 401 (first strobe 506). Similarly, before entering into the second active period 505, the GNSS module 402 gets an accurate time from the modem 401 from a time publication at (or shortly after) a second paging event from the modem 401 (second strobe 507). The GNSS module 402 for example triggers its sleep transition to and from low power mode by means of the modem time strobe.

It is assumed that the first sleep period 502 has a duration T1 which the GNSS module 402 can determine with high accuracy using a 38.4MHz clock (e.g. derived from the common modem and GNSS clock 405). Similarly, it is assumed that the second sleep period 504 has a duration T2 which the GNSS module 402 can determine with high accuracy using the 38.4MHz clock. However, during the coma period 503, the GNSS module 402 uses an 32kHz clock (e.g. also derived from the common modem and GNSS clock 505) and can therefore determine the duration of the coma period 503, assumed to be Tx, only with low accuracy.

The time between the time strobes 506, 507 is denoted as DeltaT and is known to the GNSS module 402 from the timing of the strobes 506, 507. Between the two relevant timing strobes 506, 507 there are:
A short sleep duration where the GNSS module 402 has an accurate time stamp T1;
A long Coma period during which the GNSS module 402 uses a non-accurate 32KHZ clock Tx; and
A short sleep wakeup duration for which the GNSS module 402 has an accurate duration T2.

Since Tx = DeltaT - T1 - T2 the GNSS module 402 can thus calculate the accurate value of Tx.

The GNSS module 402 may count the 32kHz pulses during the coma period 403 and determine an accurate value of the frequency of the 32kHz clock by Tx/counted 32kHz clock pulses.

The GNSS module 402 may then use this corrected value for the 32kHz clock, e.g. for accurate determination of a following coma duration. The GNSS module 402 may for example perform a periodic calibration of the 32kHz clock in the above manner.

The approach described above can be seen to use modem provided information to perform an accurate correction of the 32kHz clock and allow coma mode to be used instead of sleep mode without giving up time accuracy and without the penalty of long and power hungry wake up sequences.

In other words, clock sharing between elements of a SoC (system on chip), e.g. the modem and the GNSS module, is performed and the issues introduced by accurately tracking a clock frequency (or time) when using lower cost XTAL sources instead of the accurate, temperature compensated, sources such as TCXO are addressed. As the cost of TCXO is typically significantly higher than a simple crystal (XTAL), it is desirable to use a single XTAL source for an entire communication SoC. Thus, the high-accuracy time provided by the modem can be seen to be used for accurate coma sleep period determination and the (e.g. 32KHz) low-accuracy clock of the GNSS module can be accurately calibrated (for a short term, thermal effect will cause a clock drift) using the accurate period determined by means of the time provided by the modem.

In the following, a procedure for the handling of timing information exchange between modem and GNSS module is described in detail.

It is assumed that the modem 111 and the GNSS module 113 are part of subscriber terminal of a 3GPP or 3GPP2 cellular communication network. It is assumed that the GNSS time is synchronized with the cellular network time. It should be noted that 3GPP allows a frequency offset between base stations 103 of about 0.05ppm maximum. However these are only short term frequency effects. In mid to short term the time-bases of the base stations are assumed to be aligned with GNSS (e.g. GPS) time.

It is further assumed that the modem 111 can acquire the network time by synchronizing to the respective cell radio frames, e.g. by receiving an accurate strobe at the beginning of the starting symbol of a radio frame.

To simplify the following explanations, only a single radio cell 104 and a single RAT are taken into account, the modem 111 is assumed to be in idle mode all the time (i.e. that there are no connected mode transitions). For handoffs and RAT changes, additional time measurements need to be shared between the modem 111 and GNSS module 113.

The modem 111 is assumed to include a free running non-wrapping counter BCT which is not frequency correct as it uses a non-corrected XO frequency and is not aligned with either GNSS or network time. The modem derives the connection between a BCT time stamp and network time whenever an AFC (automatic frequency control) correction is applied.

The GNSS is assumed to include a free running no-wrapping counter GNCT that is duplicated to reflect the BCT values.

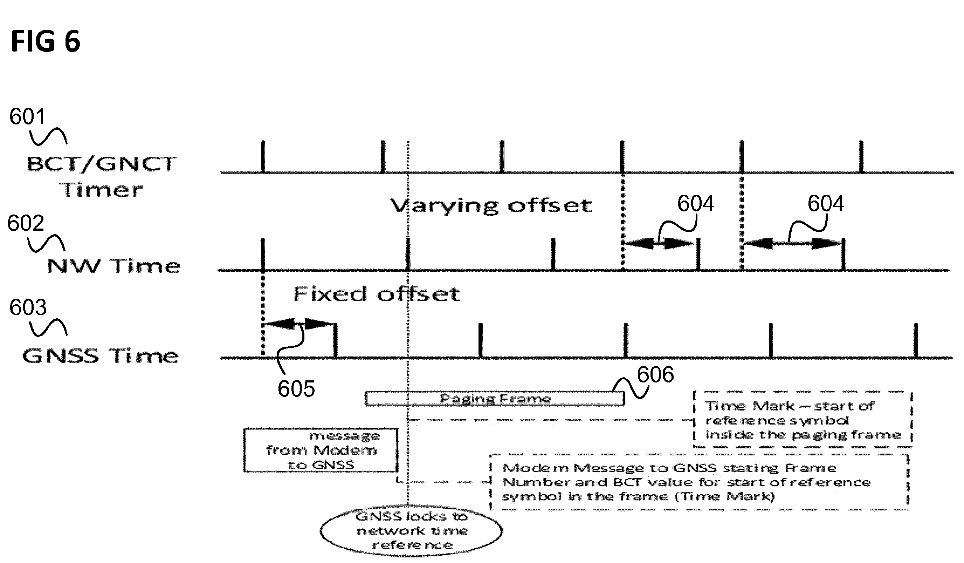

Figure 6 shows the relation of the BCT/GNCT counter (or timer) count times 601, the network time instants 602 and the GNSS time instants and the signaling of the network time to the GNSS module.

There is a varying offset 604 between the BCT/GNCT counter count times and the network time instants 602 and a fixed offset 605 between the network time instants and the GNSS time instants.

A paging frame 606 gives a time mark, the start of the reference symbol inside the paging frame 606. Based on this time mark, the modem 111 knows the accurate network time. Before the time mark, the modem 111 sends a message to the GNSS module 113. It indicates the paging frame number and the BCT number for the start of the reference symbol in the paging frame (time mark).

Based on this information, the GNSS module 113 locks to the network time.

The GNCT allows the GNSS module 113 to assert all strobes locally based on loosely timed modem messages that carry an activation time for the strobe in BCT=GNCT time. Alternatively, without GNCT, the modem 111 can assert the strobes directly. In general, the strobe can be set by either the modem 111 or the GNSS module 113.

GNSS time is the time that is associated with the GPS signaling. It is a universal time construct and the GNSS module 113 knowing it makes all GNSS calculation simpler. Using an accurate sleep time reconstruction, the GNSS module 113 has sufficient data to reconstruct the GNSS Time. So once the GNSS module 113 has acquired the time from the GNSS satellites, it can update it forever through sleep cycles using the modem time updates. So, GNSS time can be seen as a valuable time value that can be maintained in the GNSS module.

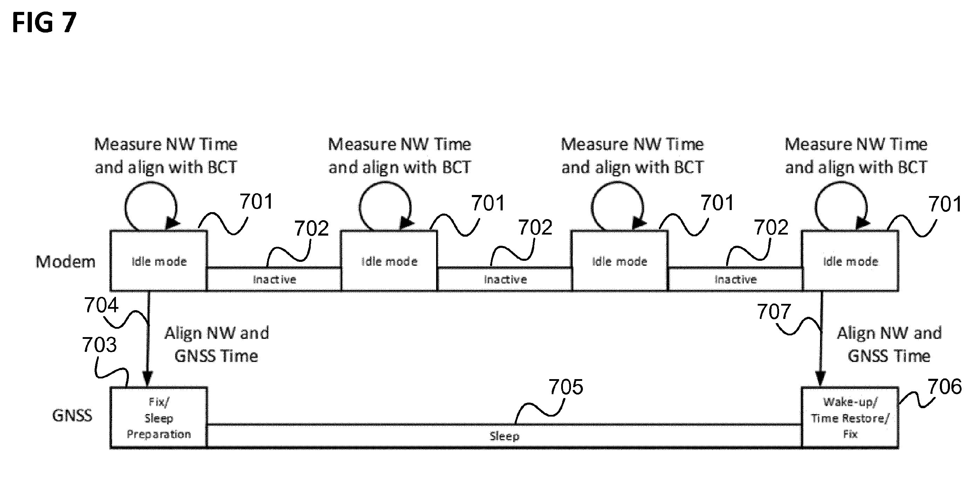

Figure 7 illustrates the flow of a time synchronization between the modem 111 and the GNSS module 113.

The modem is alternatingly in idle periods 701 and inactive (sleep) periods 702. When in idle mode, it measures the network time and aligns with BCT.

During the first (leftmost) idle periods in figure 7, for GNSS module sleep preparation 703, there is an initial synchronization 704 between GNSS time and network time (and modem) time.

In the following GNSS module sleep period 705, the GNSS module 113 is inactive but the modem 111 is still doing the AFC and timing corrections during the respective idle periods 701.

After the GNSS sleep period 705, at wake-up 706, the GNSS module is activated and readjusts its time-base by another synchronization 707 between GNSS time and network time.

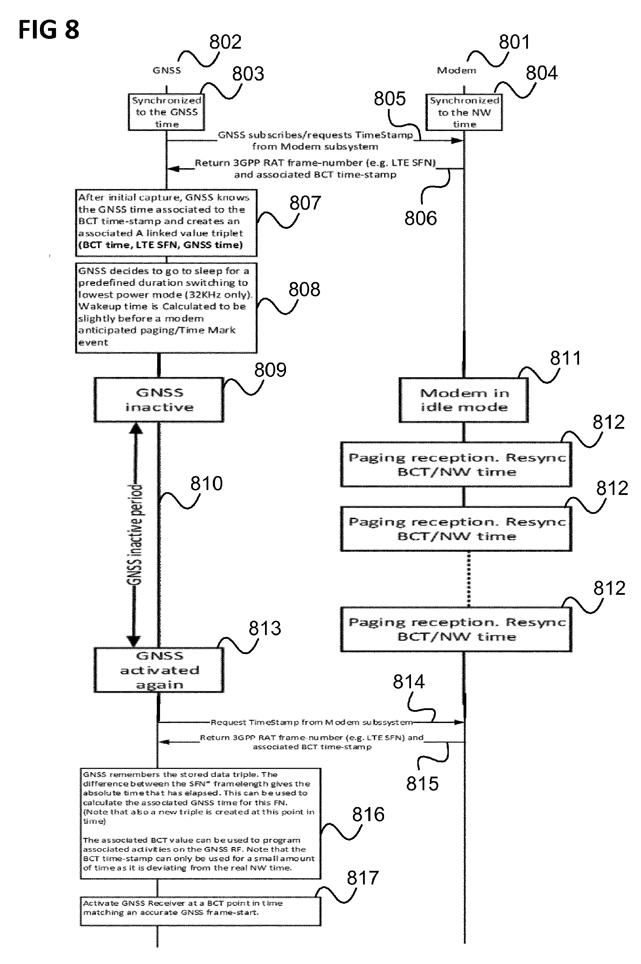

Figure 8 illustrates the flow of a time synchronization between a modem 801 (e.g. corresponding to modem 111) and a GNSS module 802 (e.g. corresponding to GNSS module 113) in more detail.

For preparation of GNSS sleep, it is assumed that at first, in 803, the GNSS module 802 is synchronized to the GNSS time and, in 804, the modem 801 is synchronized to the network time.

In 805, the GNSS module 802 requests (e.g. by a corresponding service subscription) a time stamp from the modem 801 and in 806, in response to the request, the modem 801 sends the timing information BCT and frame number (FN) to the GNSS module 802.

In 807, the GNSS module 802 correlates the BCT, the FN and the GNSS time and, in 808, triggers the sleep mode at a well-known BCT and GNSS time.

In 809, the GNSS module 802 starts to be inactive and remains inactive during an inactive period. The modem 801 is in idle mode 811 and still acquires the NW timing and resyncs according to its paging configuration, possibly several times during the GNSS inactivity period 810.

In 813, the GNSS module 802 is again activated after the designated sleep duration elapses (measured by the GNSS module's 32kHz timer).

In 814, the GNSS module 802 again requests a time stamp from the modem 801 and in 815, in response to the request, the modem 801 sends the timing information BCT and frame number (FN) to the GNSS module 802.

In 816, based on this timing information the GNSS module 802 calculates the accurate GNSS time (calculating elapsed time and adding to GNSS time).

In 817, the GNSS module activates its receiver, e.g. to calculate the terminals position. No additional time scan is required due to the modem timing information of 815.

It should be noted that after correction of its clock based on the time information from the modem, in case of a longer paging interval (controlled by the network), the GNSS module can perform satellite measurements (i.e. perform positioning) twice or more between receiving time information from the modem while maintaining a high accuracy.

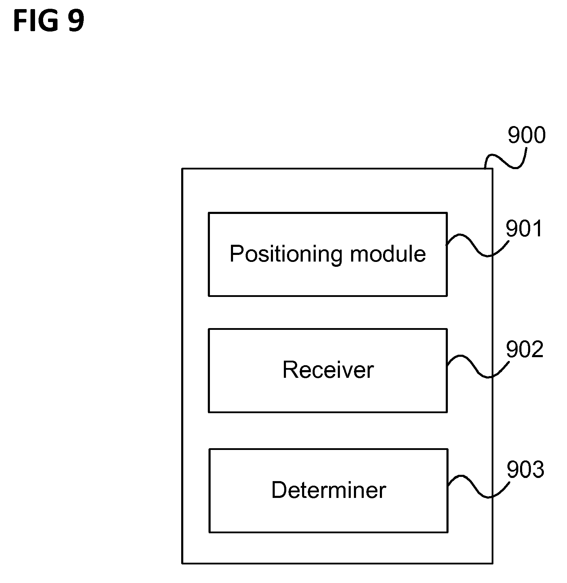

In summary, according to various embodiments, a communication device is provided as illustrated in figure 9.

Figure 9 shows a communication device 900.

The communication device 900 includes a positioning module 901 and a receiver 902 configured to receive a paging message from a mobile communication network.

Further, the communication device 900 includes a determiner 903 configured to determine a transmission time of the paging message and to transmit a time indication based on the transmission time to the positioning module 901, wherein the positioning module 901 is configured to derive a time from the time indication and to perform positioning based on the derived time.

In other words, a communication device, e.g. a communication terminal such as a mobile phone, uses a paging timing (in other words a timing of a paging event) to derive information about a current time. The communication terminal may perform this without using a communication service (such as a voice or a data call) provided by the mobile communication system, or, in other words, without being in a connected state (e.g. a RRC (radio resource control) connected state).

In other words, an active modem (receiving paging) shares its reliable time-base with the GNSS system to allow the GNSS system (e.g. module) to perform a rapid resynchronization with the satellite system even after long sleep durations.

The positioning module may be synchronized with the receiver's wake-up periods. In case of an implementation of the positioning (e.g. GNSS) module and receiver (e.g. part of a modem) on a common SoC, synchronizing the GNSS to the modem wake up periods ensures that the turn on time of the SoC top level overlaps between GNSS and Modem, reducing energy waste from un-necessary top level activation using joint sleep periods and common wake up intervals.

The components of the communication device (e.g. the positioning module, the receiver and the determiner) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions which will be described in more detail below may also be understood as a "circuit".

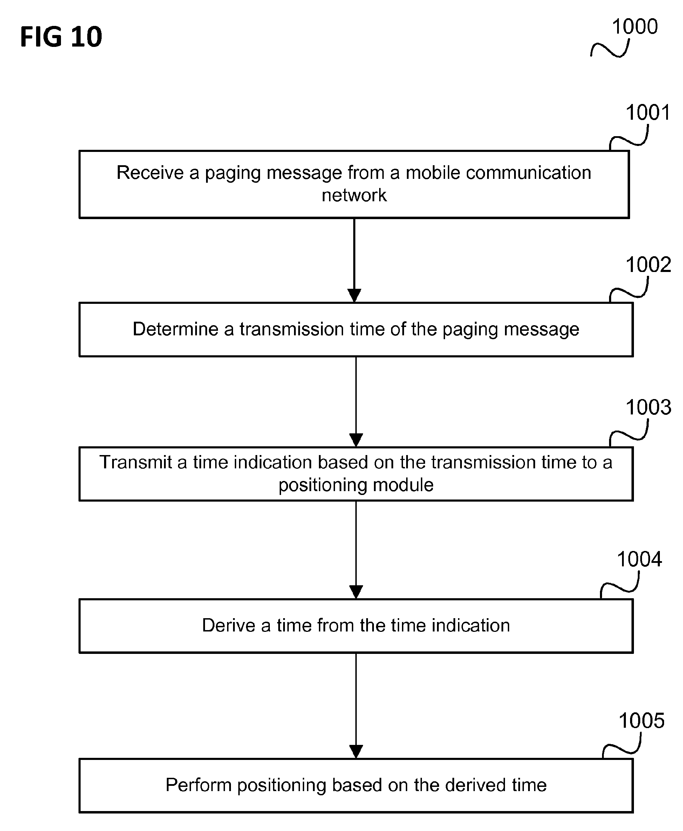

The communication device 900 for example carries out a method as illustrated in figure 10.

Figure 10 shows a method for performing positioning, for example carried out by a communication device.

In 1001, the communication device receives a paging message from a mobile communication network.

In 1002, the communication device determines a transmission time of the paging message.

In 1003, the communication device transmits a time indication based on the transmission time to a positioning module (e.g. of the communication device).

In 1004, the communication device (e.g. the positioning module) derives a time from the time indication.

In 1005, the communication device performs positioning based on the derived time.

The following examples pertain to further embodiments.

Example 1 is a communication device as illustrated in figure 9.

In Example 2, the subject matter of Example 1 may optionally include the positioning module being configured to perform a compensation of an inaccuracy of a clock used by the positioning module based on the time indication.

In Example 3, the subject matter of any one of Examples 1-2 may optionally include the positioning module being configured to enter a coma mode during a coma period and to determine the length of the coma mode based on the time indication.

In Example 4, the subject matter of Example 3 may optionally include the coma mode being a mode in which the positioning module performs a time keeping at a lower accuracy than in an active mode.

In Example 5, the subject matter of Examples 4 may optionally include the active mode being a mode in which the positioning module performs positioning.

In Example 6, the subject matter of any one of Examples 3-5 may optionally include the coma mode being a mode in which the positioning module performs a time keeping at a lower accuracy than in a sleep mode.

In Example 7, the subject matter of Example 6 may optionally include the sleep mode being a mode in which the positioning module does not perform positioning.

In Example 8, the subject matter of any one of Examples 6-7 may optionally include the sleep mode being a mode in which the positioning module performs a time keeping at a lower accuracy than in an active mode.

In Example 9, the subject matter of any one of Examples 3-8 may optionally include the positioning module being configured to measure the duration of the coma period using a clock and to compensate an inaccuracy based on the time indication and based on the duration of the coma period measured using the clock.

In Example 10, the subject matter of any one of Examples 3-9 may optionally include the positioning module being configured to determine the length of the coma period based on the time indication.

In Example 11, the subject matter of any one of Examples 1-10 may optionally include the receiver being configured to receive a first paging message from the mobile communication network and a second paging message from the mobile communication network and the determiner being configured to determine a transmission time of the first paging message and to transmit a first time indication based on the transmission time of the first paging message to the positioning module and to determine a transmission time of the second paging message and to transmit a second time indication based on the transmission time of the second paging message.

In Example 12, the subject matter of Example 11 may optionally include the second paging message being separated from the first paging message by one or more paging intervals.

In Example 13, the subject matter of any one of Examples 11-12 may optionally include the positioning module being configured to measure the length of a coma period lying between the first time indication and the second time indication based on the difference between the first time indication and the second time indication.

In Example 14, the subject matter of any one of Examples 11-13 may optionally include the positioning module being configured to derive a time based on the first time indication and the second time indication and to perform positioning based on the derived time.

In Example 15, the subject matter of any one of Examples 11-14 may optionally include the positioning module being configured to maintain a positioning time based on the first time indication and the second time indication.

In Example 16, the subject matter of any one of Examples 1-15 may optionally include the positioning module being a satellite positioning module.

In Example 17, the subject matter of Example 16 may optionally include performing positioning based on the derived time comprising receiving satellite signals based on the derived time.

In Example 18, the subject matter of any one of Examples 1-17 may optionally include the time indication being a strobe signal marking a certain point in time.

In Example 19, the subject matter of any one of Examples 1-18 may optionally include the time indication comprising at least one of a frame number and a counter value.

In Example 20, the subject matter of any one of Examples 1-19 may optionally include the time indication being a strobe signal at a certain point in time.

In Example 21, the subject matter of any one of Examples 1-20 may optionally include the receiver being in an idle mode.

In Example 22, the subject matter of any one of Examples 1-21 may optionally include the determiner being configured to synchronize a timer to a network time of a communication network transmitting the paging message based on the transmission time of the paging message and to transmit the time indication based on the synchronized timer.

Example 23 is a method for performing positioning as illustrated in figure 10.

In Example 24, the subject matter of Example 23 may optionally include performing a compensation of an inaccuracy of a clock used by the positioning module based on the time indication.

In Example 25, the subject matter of any one of Examples 23-24 may optionally include entering a coma mode during a coma period and determining the length of the coma mode based on the time indication.

In Example 26, the subject matter of Example 25 may optionally include the coma mode being a mode in which the positioning module performs a time keeping at a lower accuracy than in an active mode.

In Example 27, the subject matter of Example 26 may optionally include the active mode being a mode in which the positioning module performs positioning.

In Example 28, the subject matter of any one of Examples 25-27 may optionally include the coma mode being a mode in which the positioning module performs a time keeping at a lower accuracy than in a sleep mode.

In Example 29, the subject matter of Example 28 may optionally include the sleep mode being a mode in which the positioning module does not perform positioning.

In Example 30, the subject matter of any one of Examples 28-29 may optionally include the sleep mode being a mode in which the positioning module performs a time keeping at a lower accuracy than in an active mode.

In Example 31, the subject matter of any one of Examples 25-30 may optionally include measuring the duration of the coma period using a clock and compensating an inaccuracy based on the time indication and based on the duration of the coma period measured using the clock.

In Example 32, the subject matter of any one of Examples 25-31 may optionally include determining the length of the coma period based on the time indication.

In Example 33, the subject matter of any one of Examples 23-32 may optionally include receiving a first paging message from the mobile communication network and a second paging message from the mobile communication network and determining a transmission time of the first paging message and transmitting a first time indication based on the transmission time of the first paging message to the positioning module and determining a transmission time of the second paging message and transmitting a second time indication based on the transmission time of the second paging message.

In Example 34, the subject matter of Example 33 may optionally include the second paging message being separated from the first paging message by one or more paging intervals.

In Example 35, the subject matter of any one of Examples 33-34 may optionally include measuring the length of a coma period lying between the first time indication and the second time indication based on the difference between the first time indication and the second time indication.

In Example 36, the subject matter of any one of Examples 33-35 may optionally include deriving a time based on the first time indication and the second time indication and performing positioning based on the derived time.

In Example 37, the subject matter of any one of Examples 33-36 may optionally include maintaining a positioning time based on the first time indication and the second time indication.

In Example 38, the subject matter of any one of Examples 23-37 may optionally include the positioning module being a satellite positioning module.

In Example 39, the subject matter of Example 38 may optionally include performing positioning based on the derived time comprising receiving satellite signals based on the derived time.

In Example 40, the subject matter of any one of Examples 23-39 may optionally include the time indication being a strobe signal marking a certain point in time.

In Example 41, the subject matter of any one of Examples 23-40 may optionally include the time indication comprising at least one of a frame number and a counter value.

In Example 42, the subject matter of any one of Examples 23-41 may optionally include the time indication being a strobe signal at a certain point in time.

In Example 43, the subject matter of any one of Examples 23-42 may optionally include receiving the paging message in an idle mode.

In Example 44, the subject matter of any one of Examples 23-43 may optionally include synchronizing a timer to a network time of a communication network transmitting the paging message based on the transmission time of the paging message and transmitting the time indication based on the synchronized timer.

It should be noted that one or more of the features of any of the examples above may be combined with any one of the other examples.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A communication device comprising
a positioning module;
a receiver configured to receive a paging message from a mobile communication network; and
a determiner configured to determine a transmission time of the paging message and to transmit a time indication based on the transmission time to the positioning module; wherein the positioning module is configured to derive a time from the time indication and to perform positioning based on the derived time.

2. The communication device of claim 1, wherein the positioning module is configured to perform a compensation of an inaccuracy of a clock used by the positioning module based on the time indication.

3. The communication device of claim 1 or 2, wherein the positioning module is configured to enter a coma mode during a coma period and to determine the length of the coma mode based on the time indication.

4. The communication device of claim 3, wherein the coma mode is a mode in which the positioning module performs a time keeping at a lower accuracy than in an active mode.

5. The communication device of claim 4, wherein the active mode is a mode in which the positioning module performs positioning.

6. The communication device of any one of claims 3 to 5, wherein the coma mode is a mode in which the positioning module performs a time keeping at a lower accuracy than in a sleep mode.

7. The communication device of claim 6, wherein the sleep mode is a mode in which the positioning module does not perform positioning.

8. The communication device of claim 6 or 7, wherein the sleep mode is a mode in which the positioning module performs a time keeping at a lower accuracy than in an active mode.

9. The communication device of any one of claims 3 to 8, wherein the positioning module is configured to measure the duration of the coma period using a clock and to compensate an inaccuracy based on the time indication and based on the duration of the coma period measured using the clock.

10. The communication device of any one of claims 3 to 9, wherein the positioning module is configured to determine the length of the coma period based on the time indication.

11. The communication device of any one of claims 1 to 10, wherein the receiver is configured to receive a first paging message from the mobile communication network and a second paging message from the mobile communication network and the determiner is configured to determine a transmission time of the first paging message and to transmit a first time indication based on the transmission time of the first paging message to the positioning module and to determine a transmission time of the second paging message and to transmit a second time indication based on the transmission time of the second paging message.

12. The communication device of claim 11, wherein the second paging message is separated from the first paging message by one or more paging intervals.

13. The communication device of claim 11 or 12, wherein the positioning module is configured to measure the length of a coma period lying between the first time indication and the second time indication based on the difference between the first time indication and the second time indication.

14. The communication device of any one of claims 11 to 13, wherein the positioning module is configured to derive a time based on the first time indication and the second time indication and to perform positioning based on the derived time.

15. A method for performing positioning comprising:
receiving a paging message from a mobile communication network;
determining a transmission time of the paging message;
transmitting a time indication based on the transmission time to a positioning module;
deriving a time from the time indication; and
performing positioning based on the derived time.

## Amended claims

### Amended claims in accordance with Rule 137(2) EPC.

1. A communication device comprising
a positioning module (901);
a receiver (902) configured to receive a first paging message and a second paging message from a mobile communication network; and
a determiner (903) configured to determine a transmission time of the first paging message (1002) and a transmission time of the second paging message and to transmit a first time indication based on the first transmission time and a second time indication based on the second transmission time to the positioning module (1003); wherein the positioning module is configured to determine a duration of a coma period lying between the first time indication and the second time indication by subtracting at least one known duration corresponding to a positioning module mode from a duration between the first time indication and the second time indication, wherein the positioning module is configured to derive a time from the determined duration of the coma period and to perform positioning based on the derived time.

2. The communication device of claim 1, wherein the positioning module is configured to perform a compensation of an inaccuracy of a clock used by the positioning module based on the time indication.

3. The communication device of claim 1, wherein the coma mode is a mode in which the positioning module performs a time keeping at a lower accuracy than in an active mode.

4. The communication device of claim 3, wherein the active mode is a mode in which the positioning module performs positioning.

5. The communication device of any one of claims 1 to 4, wherein the coma mode is a mode in which the positioning module performs a time keeping at a lower accuracy than in a sleep mode.

6. The communication device of claim 5, wherein the sleep mode is a mode in which the positioning module does not perform positioning.

7. The communication device of claim 5 or 6, wherein the sleep mode is a mode in which the positioning module performs a time keeping at a lower accuracy than in an active mode.

8. The communication device of any one of claims 1 or 3 to 7, wherein the positioning module is configured to measure the duration of the coma period using a clock and to compensate an inaccuracy based on the time indication and based on the duration of the coma period measured using the clock.

9. The communication device of any one of claims 1 or 3 to 8, wherein the positioning module is configured to determine the length of the coma period based on the time indication.

10. The communication device of claim 9, wherein the second paging message is separated from the first paging message by one or more paging intervals.

11. A method for performing positioning comprising:
receiving a first paging message and a second paging message from a mobile communication network;
determining a transmission time of the first paging message and a transmission time of the second paging message;
transmitting a first time indication based on the first transmission time and a second time indication based on a second transmission time to a positioning module;
determining a duration of a coma mode by subtracting at least one known duration corresponding to a positioning module mode from a duration between the first time indication and the second time indication;
deriving a time from the time indication and the determined length of the coma mode; and
performing positioning based on the derived time.
